# EUROPEAN PATENT APPLICATION

(11) **EP 4 654 543 A1**
(43) Date of publication of application: **26.11.2025**
(21) Application number: 23916674.7
(22) Date of filing: 16.01.2023
(51) Int. Cl.: H04L 41/0894, H04L 65/1069, H04L 65/80, H04M 15/00, H04W 28/24

(54) **EXTENDED REALITY AND MULTIMEDIA SERVICE DATA TRANSMISSION METHOD AND APPARATUS, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); MAO, Yuxin, Beijing 100085 (CN)
(74) Representative: Hersina, Günter
(86) International application number: PCT/CN2023/072476
(87) International publication number: WO 2024/152183

(57) **Abstract**

The present disclosure relates to the technical field of communications, and particularly relates to an extended reality and multimedia (XRM) service data transmission method and apparatus, and a storage medium, which are used for performing more rational policy decision and resource authorization for an XRM service, and providing a better QoS assurance for service date flow (SDF) transmission. The method comprises: determining an application function (AF) session request, wherein the AF session request comprises a common identifier for identifying an XRM SDF group; and on the basis of a time threshold value and the common identifier, executing policy decision regarding the AF session request.

## Description

### FIELD

The present invention relates to the field of communication technology, and more particularly to a method and device for transmission of extended reality and multimedia (XRM) service data, and a storage medium.

### BACKGROUND

Mobile media services, cloud augmented reality (AR)/virtual reality (VR) and other extended range (XR), cloud games, video-based machine or drone remote control and other services will contribute more and more traffic to 5G networks. Extended reality and multimedia (XRM) service (also called multimodal service) involves multimodal data. The service data flows in multimodal data often have strong correlations, for example, audio flows and video flows need to synchronize, touch and vision need to synchronize, etc. There are some common features in data flows per se of this type of media services, among the data flows, and in the requirements of these service data flows for network transmission. The effective identification and utilization of these features will facilitate the transmission and control of the network and services, as well as service assurance and user experience.

In the related art, the XRM service needs to comprehensively consider the quality of service (QoS) characteristics of the service data flows related to the service, and QoS authorization for a plurality of service data flows of a single terminal or data flows of a plurality of terminals needs to be consistent.

However, the current policy control function (PCF) entity cannot determine the scope and scale of an XRM service group, cannot accurately determine the QoS authorization requirement of the XRM service group, and cannot accurately perform QoS authorization for a plurality of service data flows (SDF) within the XRM group.

### SUMMARY

In order to overcome the problems existing in the related art, the present invention provides a method and device for transmission of extended reality and multimedia service data, and a storage medium.

According to a first aspect of embodiments of the present invention, a method and device for transmission of extended reality and multimedia service data and a storage medium are provided. The method is performed by a core network device and includes:
determining an application function (AF) session request, where the session request includes a common identifier for identifying an extended reality and multimedia (XRM) service data flow (SDF) group; and
performing a policy decision for the AF session request according to a time threshold and the common identifier.

According to a second aspect of embodiments of the present invention, a method and device for transmission of extended reality and multimedia service data and a storage medium are provided. The method is performed by a policy control function (PCF) entity in a core network device and includes:
receiving an application function (AF) session request, where the AF session request includes a common identifier for identifying an extended reality and multimedia (XRM) service data flow (SDF) group; and
performing a policy decision for the AF session request according to a time threshold and the common identifier.

According to a third aspect of embodiments of the present invention, a method and device for transmission of extended reality and multimedia service data and a storage medium are provided. The method is performed by an application function (AF) entity in a core network device and includes:
sending an AF session request, where the AF session request includes a time threshold and a common identifier for identifying an extended reality and multimedia (XRM) service data flow (SDF) group, and the AF session request is configured for a policy control function (PCF) entity to perform a policy decision for the AF session request according to the common identifier and the time threshold.

According to a fourth aspect of embodiments of the present invention, a method and device for transmission of extended reality and multimedia service data and a storage medium are provided. The method is performed by a core network function network element in a core network device and includes:
receiving an application function (AF) session request, where the AF session request includes a time threshold and a common identifier for identifying an extended reality and multimedia (XRM) service data flow (SDF) group; and
sending the AF session request to a policy control function (PCF) entity, where the AF session request is configured for the PCF entity to perform a policy decision for the AF session request according to the common identifier and the time threshold.

According to a fifth aspect of embodiments of the present invention, a device for transmission of extended reality and multimedia service data is provided, which includes:
a determining module, configured to determine an application function (AF) session request, where the session request includes a common identifier for identifying an extended reality and multimedia (XRM) service data flow (SDF) group; and
a performing module, configured to perform a policy decision for the AF session request according to a time threshold and the common identifier.

According to a sixth aspect of embodiments of the present invention, a device for transmission of extended reality and multimedia service data is provided, which includes:
a sending module, configured for an application function entity (AF) to send an AF session request, where the AF session request includes a common identifier for identifying an extended reality and multimedia (XRM) service data flow (SDF) group;
a receiving module, configured for a policy control function (PCF) entity to receive the AF session request; and
a performing module, configured for the PCF entity to perform a policy decision for the AF session request according to a time threshold and the common identifier.

According to a seventh aspect of embodiments of the present invention, a device for transmission of extended reality and multimedia service data is provided, which includes:
a receiving module, configured to receive an application function (AF) session request, where the AF session request includes a common identifier for identifying an extended reality and multimedia (XRM) service data flow (SDF) group; and
a performing module, configured to perform a policy decision for the AF session request according to a time threshold and the common identifier.

According to an eighth aspect of embodiments of the present invention, a device for transmission of extended reality and multimedia service data is provided, which includes:
a sending module, configured to send an AF session request, where the AF session request includes a time threshold and a common identifier for identifying an extended reality and multimedia (XRM) service data flow (SDF) group, and the AF session request is configured for a policy control function (PCF) entity to perform a policy decision for the AF session request according to the common identifier and the time threshold.

According to a ninth aspect of embodiments of the present invention, a device for transmission of extended reality and multimedia service data is provided, which includes:
a receiving module, configured to receive an application function (AF) session request, where the AF session request includes a time threshold and a common identifier for identifying an extended reality and multimedia (XRM) service data flow (SDF) group; and
a sending module, configured to send the AF session request to a policy control function (PCF) entity, where the AF session request is configured for the PCF entity to perform a policy decision for the AF session request according to the common identifier and the time threshold.

According to a tenth aspect of embodiments of the present invention, a device for transmission of extended reality and multimedia service data is provided, which includes:
a sending module, configured for an application function entity (AF) to send an AF session request, where the AF session request includes a common identifier for identifying an extended reality and multimedia (XRM) service data flow (SDF) group;
a receiving module, configured for a policy control function (PCF) entity to receive the AF session request; and
a performing module, configured for the PCF entity to perform a policy decision for the AF session request according to a time threshold and the common identifier.

According to an eleventh aspect of embodiments of the present invention, a device for transmission of extended reality and multimedia service data is provided, which includes: a processor; and a memory for storing instructions executable by the processor; and the processor is configured to perform the method according to any embodiment of the first aspect, the second aspect, the third aspect or the fourth aspect.

According to a twelfth aspect of embodiments of the present invention, a storage medium is provided, in which instructions are stored. The instructions, when executed by a processor of a core network device, cause the core network device to perform the method according to the first aspect, the instructions, when executed by a processor of a policy control function (PCF) entity, cause the PCF entity to perform the method according to the second aspect, the instructions, when executed by a processor of an application function (AF) entity, cause the AF entity to perform the method according to the third aspect, the instructions, when executed by a processor of a core network function network element, cause the core network function network element to perform the method according to the fourth aspect, or the instructions, when executed by processors of a PCF entity and an AF entity in the core network device, cause the PCF entity and the AF entity to perform the method according to the fifth aspect.

According to a thirteenth aspect of embodiments of the present invention, a communication system is provided, and the system is used to execute the method according to the first aspect.

According to a fourteenth aspect of embodiments of the present invention, a communication system is provided, including:
a policy control function (PCF) entity for performing the method according to the second aspect;
an application function (AF) entity for performing the method according to the third aspect; and
a core network function network element, configured to perform the method according to the fourth aspect.

The technical solutions provided by embodiments of the present invention may include the following beneficial effects: a PCF receives an AF session request, and since the AF session request includes a common identifier for identifying an XRM SDF group, the PCF may determine the group to which the SDF belongs according to the common identifier. Furthermore, the PCF may consider a time threshold, and perform a policy decision for an AF session request within the time threshold, so that the PCF may make a more reasonable policy decision and resource authorization for the XRM service according to the time threshold and the common identifier, and provide better QoS guarantee for SDF transmission, without need to repeatedly modify the policy decision for a plurality of SDFs belonging to the same XRM SDF group, thereby improving authorization efficiency.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a schematic diagram of a communication system according to an example embodiment.
FIG. 2 is a flow chart showing a method for transmission of extended reality and multimedia service data according to an example embodiment.
FIG. 3 is a flow chart showing a method for transmission of extended reality and multimedia service data according to an example embodiment.
FIG. 4 is a flow chart showing a method for transmission of extended reality and multimedia service data according to an example embodiment.
FIG. 5 is a flow chart showing a method for transmission of extended reality and multimedia service data according to an example embodiment.
FIG. 6 is a flow chart showing a method for transmission of extended reality and multimedia service data according to an example embodiment.
FIG. 7 is a flow chart showing a method for transmission of extended reality and multimedia service data according to an example embodiment.
FIG. 8 is a flow chart showing a method for transmission of extended reality and multimedia service data according to an example embodiment.
FIG. 9 is a flow chart showing a method for transmission of extended reality and multimedia service data according to an example embodiment.
FIG. 10 is a flow chart showing a method for transmission of extended reality and multimedia service data according to an example embodiment.
FIG. 11 is a flow chart showing a method for transmission of extended reality and multimedia service data according to an example embodiment.
FIG. 12 is a block diagram showing a device for transmission of extended reality and multimedia service data according to an example embodiment.
FIG. 13 is a block diagram showing a device for transmission of extended reality and multimedia service data according to an example embodiment.
FIG. 14 is a block diagram showing a device for transmission of extended reality and multimedia service data according to an example embodiment.
FIG. 15 is a block diagram showing a device for transmission of extended reality and multimedia service data according to an example embodiment.
FIG. 16 is a block diagram showing a device for transmission of extended reality and multimedia service data according to an example embodiment.
FIG. 17 is a block diagram showing a device for transmission of extended reality and multimedia service data according to an example embodiment.

### DETAILED DESCRIPTION

Example embodiments will be described in detail herein, examples of which are illustrated in the accompanying drawings. The following description refers to the accompanying drawings in which the same reference numerals in different drawings represent the same or similar elements unless otherwise represented. The implementations set forth in the following description of the embodiments do not represent all possible implementations in line with the present invention.

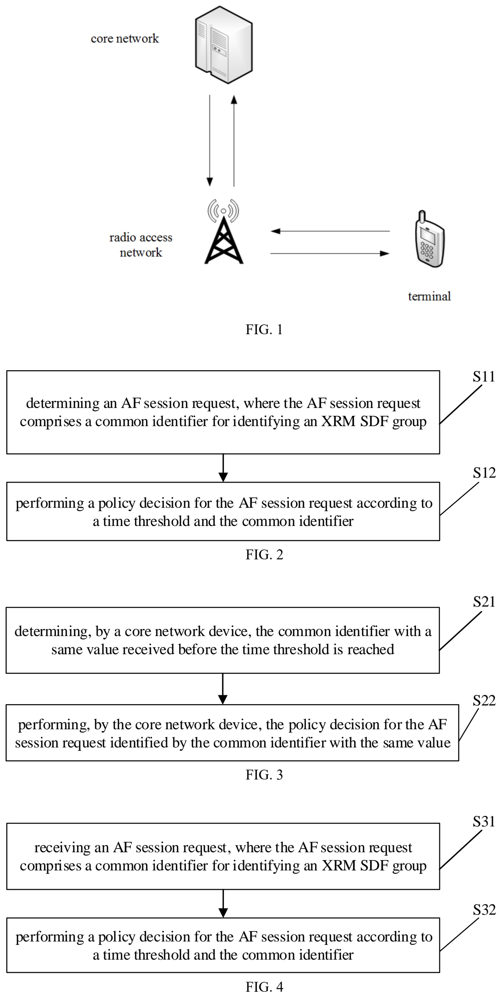

The method for transmission of extended reality and multimedia service data according to embodiments of the present invention may be applied to a wireless communication system shown in FIG. 1. As shown in FIG. 1, a mobile station accesses the radio access network through a radio access network device such as a base station, and the radio access network device and the core network device complete the backhaul and forward transmission of data to perform various communication services.

It may be understood that the wireless communication system is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be classified into a 2nd generation (2G) network, a 3G network, a 4G network, or a future evolution network, such as a 5G network, which may also be referred to as a new radio (NR) network, according to the capacity, rate, delay and other factors of different networks. For ease of description, the wireless communication network will be sometimes abbreviated as a network or a system in the present invention. The network in the present invention may include a radio access network (RAN), and a core network (CN). The network includes a network device, which may be a radio access network node, a core network function, etc. The radio access network node may also be referred to as a base station. The network may provide network services to the terminal through the network device. Different operators may provide different network services to the terminal, and it may also be understood as that different operators correspond to different operator networks.

A mobile station (MS), also known as a user equipment (UE), a terminal, a mobile terminal (MT), etc., is a device that provides voice and/or data connectivity to a user. For example, the terminal may be a handheld device, a vehicle-mounted device, or the like that has a wireless connection function. At present, some examples of the terminal include a smart phone (a mobile phone), a pocket personal computer (PPC), a palmtop computer, a personal digital assistant (PDA), a notebook computer, a tablet computer, a wearable device, a vehicle-mounted device, or the like.

The 5G system includes a device that manages and coordinates the radio access network and the access and mobility-related requirements of terminals. For example, core network functions include a session management function (SMF) device, an access and mobility management function (AMF), a radio access network (RAN), a unified data management (UDM) device, a policy control function (PCF) device, a user plane function (UPF) device, and a user equipment (UE). Of course, the core network functions also include other types of devices, which are not listed one by one in embodiments of the present invention.

The following is a detailed introduction to the relevant entity functions involved in embodiments of the present invention.

AF entity is responsible for interacting with a 3GPP core network to provide business or services, including interaction with NEF and policy architecture.

NEF entity has main functions including: securely exposing services and capabilities provided by 3GPP network function internally or to a third party, etc.; transforming or translating information interacting with the AF and internal network function interaction information, such as an AF service identifier and internal 5G core network information such as a data network name (DNN), single network slice selection assistance information (S-NSSAI), etc.

AMF entity is responsible for access and mobility management and has main functions including: connection management, mobility management, registration management, access authentication and authorization, reachability management, security context management, and other functions related to access and mobility such as user authentication, switching, location update.

PCF entity has main functions related to policy, including: unified policy formulation, provision of policy control, and acquisition of subscription information related to policy decision from a unified data management (UDR), etc.

UPF entity is responsible for user plane functions, mainly including: data packet routing and transmission, packet detection, service usage reporting, QoS processing, legal monitoring, uplink packet detection, downlink data packet storage and other user plane related functions.

SMF entity is responsible for session management functions, mainly including: session management (such as session establishment, modification and release, including tunnel maintenance between UPF and AN), UPF selection and control, service and session continuity (SSC) mode selection, roaming and other session-related functions.

Mobile media services, cloud augmented reality (AR)/virtual reality (VR) and other extended range (XR), cloud games, video-based machine or drone remote control and other services will contribute more and more traffic to 5G networks. Extended reality and multimedia (XRM) service (also called multimodal service) involves multimodal data. The service data flows in multimodal data often have strong correlations, for example, audio flows and video flows need to synchronize, touch and vision need to synchronize, etc. There are some common features in data flows per se of this type of media services, among the data flows, and in the requirements of these service data flows for network transmission. The effective identification and utilization of these features will facilitate the transmission and control of the network and services, as well as service assurance and user experience.

In the related art, the XRM service needs to comprehensively consider the quality of service (QoS) characteristics of the service data flows related to the service, and QoS authorization for a plurality of service data flows of a single terminal or data flows of a plurality of terminals needs to be consistent.

However, the current policy control function (PCF) entity cannot determine the scope and scale of an XRM service group, cannot accurately determine the QoS authorization requirement of the XRM service group, and cannot accurately perform QoS authorization for a plurality of service data flows (SDF) within the XRM group.

In view of the above, embodiments of the present invention provide a method for transmission of XRM service data, where a PCF receives an AF session request, and since the AF session request includes a common identifier for identifying an XRM SDF group, the PCF may determine which XRM SDF group the SDF belongs to according to the common identifier. Furthermore, the PCF may consider a time threshold, and perform a policy decision for an AF session request within the time threshold, so that the PCF may make a more reasonable policy decision and resource authorization for the XRM service according to the time threshold and the common identifier, and provide better QoS guarantee for SDF transmission, and there is no need to repeatedly modify the policy decision for a plurality of SDFs belonging to the same XRM SDF group, thereby improving authorization efficiency.

FIG. 2 is a flow chart showing a method for transmission of XRM service data according to an example embodiment. As shown in FIG. 2, the method is performed by a core network device, and includes the following steps.

In step S11, an AF session request is determined, and the session request includes a common identifier for identifying an XRM SDF group.

A plurality of SDFs of an XRM service/application belong to the same SDF group, and the common identifiers of the SDFs within an SDF group are the same.

In an embodiment, the SDFs corresponding to the common identifier correspond to the same terminal or to a plurality of terminals (a terminal group).

In an embodiment, the AF session request may also include information such as a UE address or UE identifier, an AF identifier, an application identifier, a DNN, an S-NSSAI, or a QoS parameter.

In some embodiments, the AF session request may include an XRM service identifier for identifying the XRM SDF group, and SDFs belonging to the same SDF group in an XRM service/application have the same XRM service identifier.

In step S12, a policy decision is performed for the AF session request according to a time threshold and the common identifier.

In embodiments of the present invention, the core network device determines the AF session request, and since the AF session request includes a common identifier for identifying an XRM SDF group, the core network device may determine which XRM group the SDF belongs to according to the common identifier. Furthermore, the core network device may consider a time threshold, and perform a policy decision for an AF session request within the time threshold, so that the core network device may make a more reasonable policy decision and resource authorization for the XRM service according to the time threshold and the common identifier, and provide better QoS guarantee for SDF transmission, and there is no need to repeatedly modify the policy decision for a plurality of SDFs belonging to the same XRM SDF group, thereby improving authorization efficiency.

In a method for transmission of XRM service data according to embodiments of the present invention, the time threshold includes:
a time threshold determined according to a timer locally set in the core network device;
a time threshold determined according to a time value or a time window included in the AF session request;
a time threshold determined according to a timer or a time window in an operator policy;
a time threshold determined according to a default timer or time window in subscription information; or
a time threshold determined according to a timer locally set in the core network device, a time value or a time window included in the AF session request, a default timer or time window in an operator policy or subscription information, and a priority of these types of values.

In an embodiment, the core network device may determine the time threshold according to a timer locally set in the core network device.

For example, if the timer locally set in the core network device is 10 ms, the core network device may determine the time threshold to be 10 ms or 8 ms or other time values less than 10 ms.

In an embodiment, the AF session request carries a time value or a time window, and the core network device determines the time threshold according to the time window carried in the AF session request.

For example, the AF session request carries a time window of 10 ms-30 ms, and the core network device may determine that a time threshold may be determined from 10 ms-30 ms, as long as the time threshold is greater than 10 ms and less than 30 ms.

In an embodiment, the core network device may determine the time threshold according to a timer or a time window in an operator policy.

For example, if the timer set for a certain XRM service in the operator policy is 15 ms, when receiving an AF session request for the certain XRM service, the core network device may determine that the time threshold of the SDF group for the XRM service is 15 ms, or a value less than 15 ms considering the network status, such as 12 ms.

In an embodiment, the time threshold is determined according to a default timer or time window in the subscription information.

The subscription information is stored in the Unified Data Management (UDM).

For example, in a case where the core network device receives an AF session request for an XRM service and determines that the default timer in a subscription request for the XRM service is 10 ms, the core network device may determine that the time threshold of the SDF group for the XRM service is 10 ms or 8 ms (a suitable value less than 10 ms).

In an embodiment, the core network device determines the time threshold according to a priority of a timer locally set in the core network device, a time window, a timer in an operator policy, and a default timer.

For example, when there is a timer locally set in the core network device, there is a timer set in the operator policy, there is a default timer recorded in the subscription information, and there is also a time window included in the AF session request received by the PCF, the core network device may determine the time threshold according to a priority of these timers or time windows.

The priority of these timers or time windows may be determined according to a preset rule. For example, the priority of the default timer in the subscription information is lower than the priority of the timer in the operator policy, the priority of the timer in the operator policy is lower than the priority of the timer locally set in the core network device, and the priority of the timer locally set in the core network device is lower than the priority of the time window carried in the AF session request. The core network device may select the timer or time window with the highest priority as the time threshold.

In a method for transmission of XRM service data according to embodiments of the present invention, the above step S12 of performing the policy decision for the AF session request according to the time threshold and the common identifier may be implemented as steps S21-S22, as shown in FIG. 3.

In step S21, the core network device determines the common identifier with the same value received before the time threshold is reached.

The common identifier with the same value is configured to identify that a plurality of XRM SDFs belong to the same group.

In step S22, the core network device performs the policy decision for the AF session request identified by the common identifier with the same value.

In embodiments of the present invention, the core network device determines a time threshold and performs a policy decision for an AF session request identified by a common identifier with the same value before the time threshold is reached, so that the core network device may determine SDFs belonging to the same group and make the policy decision for the same group of SDFs, so that the core network device can make a more reasonable policy decision and resource authorization for the XRM service, and provide more optimized QoS guarantees for the SDF transmission.

In a method for transmission of XRM service data according to embodiments of the present invention, the policy decision includes:
authorizing the same QoS to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

The PCC rule represents the requirement of a service for QoS and charging requirement for the service. The network will provide services of different QoS to users according to service types and user's subscription level, detect different service data flows and report charging information such as statistic traffic and duration to a charging center for charging.

In embodiments of the present invention, after determining an XRM SDF group to which the SDF belongs, a policy decision may be made for the SDFs in the same group, such as authorizing the same QoS or authorizing for each SDF a respective QoS, etc., so that the core network device can make a more reasonable policy decision and resource authorization for the XRM service, thereby providing better QoS guarantees for the SDF transmission.

In a method for transmission of XRM service data according to embodiments of the present invention, in response to receiving an AF session request including the common identifier after the time threshold, a policy decision is performed for the AF session request received after the time threshold according to the policy decision performed for the AF session request received before the time threshold.

In an embodiment, if the value of the common identifier of the AF session request received after the time threshold is the same as the value of the common identifier of the AF session request received before the time threshold, the same policy decision as that performed for the AF session request received before the time threshold may be performed for the AF session request received after the time threshold.

For example, if the policy decision performed by the core network device for the AF session request received before the time threshold is that a respective PCC rule is generated for each SDF, and a respective QoS is generated for each SDF, based on the subscription information and/or operator policy corresponding to each SDF in the SDF group, the policy decision performed by the core network device for the AF session request received after the time threshold may also be that a respective PCC rule is generated for each SDF, and a respective QoS is generated for each SDF, based on the subscription information and/or operator policy corresponding to each SDF in the SDF group.

In embodiments of the present invention, the policy decision for the AF session request received by the core network device after the time threshold may be determined based on the AF session request before the time threshold, without the need to re-determine the policy decision for the AF session request received after the time threshold, thus improving efficiency.

The following describes the method for transmission of XRM service data according to embodiments of the present invention by taking a PCF entity in the core network device as the execution subject.

FIG. 4 is a flow chart showing a method for transmission of XRM service data according to an example embodiment. As shown in FIG. 4, the method is performed by a PCF entity in a core network device, and includes the following steps.

In step S31, an AF session request is received, the AF session request includes a common identifier for identifying an XRM SDF group.

A plurality of SDFs of an XRM service/application belong to the same SDF group, and the common identifiers of the SDFs within an SDF group are the same.

In an embodiment, the SDFs corresponding to the common identifier come from the same terminal or from a plurality of terminals (a terminal group).

In an embodiment, the AF session request may also include information such as a UE address or UE identifier, an AF identifier, an application identifier, a DNN, an S-NSSAI, or a QoS parameter.

In some embodiments, the AF session request may include an XRM service identifier for identifying the XRM SDF group, and SDFs belonging to the same SDF group in an XRM service/application have the same XRM service identifier.

In step S32, a policy decision is performed for the AF session request according to a time threshold and the common identifier.

In embodiments of the present invention, the PCF receives an AF session request, and since the AF session request includes a common identifier for identifying an XRM SDF group, the PCF may determine the XRM group to which the SDF belongs according to the common identifier. Furthermore, the PCF may consider a time threshold, and perform a policy decision for an AF session request within the time threshold, so that the PCF may make a more reasonable policy decision and resource authorization for the XRM service according to the time threshold and the common identifier, and provide better QoS guarantee for SDF transmission, and there is no need to repeatedly modify the policy decision for a plurality of SDFs in the same XRM SDF group, thereby improving authorization efficiency.

In a method for transmission of XRM service data according to embodiments of the present invention, the time threshold includes:
a time threshold determined according to a timer locally set in the PCF entity;
a time threshold determined according to a time value or a time window included in the AF session request;
a time threshold determined according to a timer or a time window in an operator policy;
a time threshold determined according to a default timer or time window in subscription information; or
a time threshold determined according to a timer locally set in the PCF entity, a time value or a time window included in the AF session request, a default timer or time window in an operator policy or subscription information, and a priority of these types of values.

In an embodiment, the PCF may determine the time threshold according to a timer locally set in the PCF entity.

For example, if the timer locally set in the PCF entity is 10ms, the PCF may determine the time threshold to be 10ms or 8ms or other time values less than 10ms.

In an embodiment, the AF session request carries a time value or a time window, and the PCF determines the time threshold according to the time window carried in the AF session request.

For example, the AF session request carries a time window of 10ms-30ms, and the PCF may determine that a time threshold may be determined from the time window of 10ms-30ms, as long as long the time threshold is greater than 10ms and less than 30ms.

In an embodiment, the PCF may determine the time threshold according to a timer or a time window in an operator policy.

For example, if the timer set for a certain XRM service in the operator policy is 15ms, when receiving an AF session request for the certain XRM service, the PCF may determine that the time threshold of the SDF group for the XRM service is 15ms, or a value less than 15ms considering the network status, such as 12ms.

In an embodiment, the time threshold is determined according to a default timer or time window in the subscription information.

The subscription information is stored in the Unified Data Management (UDM).

For example, in a case where the PCF receives an AF session request for an XRM service and determines that the default timer in the subscription request for the XRM service is 10ms, the PCF may determine that the time threshold of the SDF group for the XRM service is 10ms or 8ms (a suitable value less than 10ms).

In an embodiment, the PCF determines the time threshold according to a priority of a timer locally set in the PCF entity, a time window, a timer in an operator policy, and a default timer.

For example, when there is a timer locally set in the PCF, there is a timer set in the operator policy, there is a default timer recorded in the subscription information, and there is also a time window included in the AF session request received by the PCF, the PCF may determine the time threshold according to the priority of these timers or time windows.

The priority of these timers or time windows may be determined according to a preset rule. For example, the priority of the default timer in the subscription information is lower than the priority of the timer in the operator policy, the priority of the timer in the operator policy is lower than the priority of the timer locally set in the PCF, and the priority of the timer locally set in the PCF is lower than the priority of the time window carried in the AF session request. The PCF may select the timer or time window with the highest priority as the time threshold.

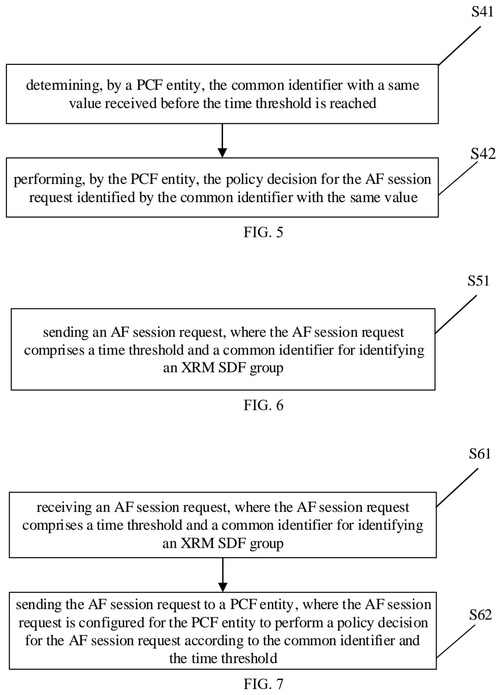

In a method for transmission of XRM service data according to embodiments of the present invention, the above step S32 of performing the policy decision for the AF session request according to the time threshold and the common identifier may be implemented as steps S41-S42, as shown in FIG. 5.

In step S41, the PCF entity determines the common identifier with the same value received before the time threshold is reached.

The common identifier with the same value is configured to identify that a plurality of XRM SDFs belong to the same group.

In step S42, the PCF entity performs the policy decision for the AF session request identified by the common identifier with the same value.

In embodiments of the present invention, the PCF determines a time threshold and performs a policy decision for an AF session request identified by a common identifier with the same value before the time threshold is reached, so that the PCF may determine SDFs belonging to the same group and make the policy decision for the same group of SDFs, so that the PCF can make a more reasonable policy decision and resource authorization for the XRM service, and provide more optimized QoS guarantees for the SDF transmission.

In a method for transmission of XRM service data according to embodiments of the present invention, the policy decision includes:
authorizing the same QoS to the SDFs in the SDF group;
generating the same QoS for each SDF according to the subscription information and/or the operator policy corresponding to each SDF in the SDF group; or
generating for each SDF a respective policy control and charging (PCC) rule, and generating for each SDF a respective QoS, according to the subscription information and/or the operator policy corresponding to each SDF in the SDF group.

The PCC rule represents the requirement of a service for QoS and charging requirement for the service. The network will provide services of different QoS to users according to the service types and the user's subscription level, detect different service data flows and report the charging information such as traffic and duration to the charging center for charging.

In embodiments of the present invention, after determining the XRM SDF group to which the SDF belongs, a policy decision may be made for the SDFs in the same group, such as authorizing the same QoS or authorizing for each SDF a respective QoS, etc., so that the PCF can make a more reasonable policy decision and resource authorization for the XRM service, thereby providing better QoS guarantees for the SDF transmission.

In a method for transmission of XRM service data according to embodiments of the present invention, in response to receiving an AF session request including the common identifier after the time threshold, a policy decision is performed for the AF session request received after the time threshold according to the policy decision performed for the AF session request received before the time threshold.

In an embodiment, if the value of the common identifier of the AF session request received after the time threshold is the same as the value of the common identifier of the AF session request received before the time threshold, the same policy decision as that performed for the AF session request received before the time threshold may be performed for the AF session request received after the time threshold.

For example, if the policy decision performed by the PCF for the AF session request received before the time threshold is that a respective PCC rule is generated for each SDF, and a respective QoS is generated for each SDF, based on the subscription information and/or operator policy corresponding to each SDF in the SDF group, the policy decision performed by the PCF for the AF session request received after the time threshold may also be that a respective PCC rule is generated for each SDF, and a respective QoS is generated for each SDF, based on the subscription information and/or operator policy corresponding to each SDF in the SDF group.

In embodiments of the present invention, the policy decision for the AF session request received by the PCF after the time threshold may be determined based on the AF session request before the time threshold, without the need to re-determine the policy decision for the AF session request received after the time threshold, thus improving efficiency.

In a method for transmission of XRM service data according to embodiments of the present invention, the AF session request received by the PCF may be sent directly by the AF entity; or the AF session request may be sent by the AF entity to the NEF entity, which in turn sends the AF session request to the PCF; or the AF session request may be sent by the AF entity to a time sensitive communication and time synchronization function (TSCTSF) entity, which in turn sends the AF session request to the PCF; or the AF session request may be sent by the AF entity to the NEF, and the NEF sends the AF session request to the TSCTSF entity, which in turn sends the AF session request to the PCF.

When the AF is a trusted AF, the AF may directly send the AF session request to the PCF. When the AF is an untrusted AF, the AF sends the AF session request to the PCF via the NEF and/or the TSCTSF.

In a method for transmission of XRM service data according to embodiments of the present invention, the PCF may receive the AF session request in the following procedure:
(a) Setting up an AF session with required QoS procedure;
(b) AF session with required QoS update procedure;
(c) Service specific parameter provisioning;
(d) Setting a policy for a future AF session.

Based on the same concept, embodiments of the present invention further provide a method for transmission of XRM service data, performed by an AF entity in a core network device.

FIG. 6 is a flow chart showing a method for transmission of XRM service data according to an example embodiment. As shown in FIG. 6, the method for transmission of XRM service data is performed by an AF entity in a core network device, and includes the following steps.

In step S51, an AF session request is sent, the AF session request includes a time threshold and a common identifier for identifying an XRM SDF group.

The AF session request is configured for a PCF entity to perform a policy decision for the AF session request according to the common identifier and the time threshold.

A plurality of SDFs of an XRM service/application belong to the same SDF group, and the common identifiers of the SDFs within an SDF group are the same.

In an embodiment, the SDFs corresponding to the common identifier come from the same terminal or from a plurality of terminals (a terminal group).

In an embodiment, the AF session request may also include information such as a UE address or a UE identifier, an AF identifier, an application identifier, a DNN, an S-NSSAI, or a QoS parameter.

In some embodiments, the AF session request may include an XRM service identifier for identifying the XRM SDF group, and SDFs belonging to the same SDF group in an XRM service/application have the same XRM service identifier.

In some embodiments, the time threshold included in the AF session request may be a time window or a time value.

In some embodiments, in addition to the time threshold included in the AF session request, the PCF may also determine the time threshold according to a timer or a time window set locally in the PCF entity, determine the time threshold according to a timer or a time window recorded in the operator policy, or determine the time threshold according to a default timer or time window in subscription information.

In an embodiment, when there is a timer or time window locally set in the PCF, there is a timer or a time window set in an operator policy, there is a default timer or time window recorded in subscription information, and there is also a time window or a time value included in the AF session request, the PCF may determine the time threshold according to a priority of these timers or time windows.

The priority of these timers or time windows may be determined according to a preset rule. For example, the priority of the default timer in the subscription information is lower than the priority of the timer in the operator policy, the priority of the timer in the operator policy is lower than the priority of the timer locally set in the PCF, and the priority of the timer locally set in the PCF is lower than the priority of the time window carried in the AF session request. The PCF may select the timer or time window with the highest priority as the time threshold.

In embodiments of the present invention, an AF sends an AF session request including a common identifier and a time threshold, so that a PCF can perform a policy decision for the AF session request based on the time threshold and the common identifier, thereby making a more reasonable policy decision and resource authorization for the XRM service, and providing better QoS guarantee for SDF transmission, without need to repeatedly modify the policy decision for a plurality of SDFs in the same XRM SDF group, thereby improving authorization efficiency.

In a method for transmission of XRM service data according to embodiments of the present invention, the AF session request is configured for the PCF entity to perform the policy decision for the AF session request identified by the common identifier with the same value and received before the time threshold is reached, and the common identifier with the same value is configured to identify that a plurality of XRM service data flows (SDF) belong to the same group.

In a method for transmission of XRM service data according to embodiments of the present invention, the policy decision includes:
authorizing the same QoS to the SDFs in the SDF group;
generating the same QoS for each SDF according to subscription information and/or an operator policy corresponding to each SDF in the SDF group; or
generating for each SDF a respective PCC rule, and generating for each SDF a respective QoS, according to subscription information and/or an operator policy corresponding to each SDF in the SDF group.

The PCC rule represents the requirement of a service for QoS and charging requirement for the service. The network will provide services of different QoS to users according to the service types and user's subscription level, detect different service data flows and report charging information such as statistic traffic and duration to the charging center for charging.

In embodiments of the present invention, after determining an XRM SDF group to which the SDF belongs, the PCF may perform a policy decision for the SDFs in the same group, such as authorizing the same QoS or authorizing for each SDF a respective QoS, etc., so that the PCF can make a more reasonable policy decision and resource authorization for the XRM service, thereby providing better QoS guarantee for the SDF transmission.

In a method for transmission of XRM service data according to embodiments of the present invention, a policy decision of an AF session request with the common identifier sent after the time threshold is determined according to a policy decision of an AF session request sent before the time threshold.

In an embodiment, if the value of the common identifier of an AF session request sent after the time threshold is the same as the value of the common identifier of the AF session request sent before the time threshold, a policy decision for the AF session request sent after the time threshold may be the same as a policy decision for the AF session request sent before the time threshold.

For example, if the policy decision for the AF session request sent by the AF before the time threshold is that a respective PCC rule is generated for each SDF, and a respective QoS is generated for each SDF, based on subscription information and/or an operator policy corresponding to each SDF in the SDF group, the policy decision for the AF session sent by the AF after the time threshold may also be that a respective PCC rule is generated for each SDF, and a respective QoS is generated for each SDF, based on the subscription information and/or operator policy corresponding to each SDF in the SDF group.

In embodiments of the present invention, the policy decision for the AF session request sent by the AF after the time threshold may be determined based on the AF session request before the time threshold, without the PCF to re-determine the policy decision for the AF session request received after the time threshold, thus improving efficiency.

In a method for transmission of XRM service data according to embodiments of the present invention, the AF sends the AF session request to at least one of: the PCF entity, an NEF entity, or a TSCTSF entity.

In an embodiment, when the AF is a trusted AF, the AF can directly send the AF session request to the PCF. When the AF is an untrusted AF, the AF sends the AF session request to the PCF via the NEF and/or the TSCTSF.

In a method for transmission of XRM service data according to embodiments of the present invention, the PCF may receive the AF session request in the following procedure:
(a) Setting up an AF session with required QoS procedure;
(b) AF session with required QoS update procedure;
(c) Service specific parameter provisioning;
(d) Setting a policy for a future AF session.

Based on the same concept, embodiments of the present invention further provide a method for transmission of XRM service data, performed by a core network function network element in a core network device.

FIG. 7 is a flow chart showing a method for transmission of XRM service data according to an example embodiment. As shown in FIG. 7, the method for transmission of XRM service data is performed by a core network function network element in a core network device, and includes the following steps.

In step S61, an AF session request is received, and the AF session request includes a time threshold and a common identifier for identifying an XRM SDF group.

A plurality of SDFs of an XRM service/application belong to the same SDF group, and the common identifiers of the SDFs within an SDF group are the same.

In an embodiment, the SDFs corresponding to the common identifier come from the same terminal or from a plurality of terminals (a terminal group).

In an embodiment, the AF session request may also include information such as a UE address or a UE identifier, an AF identifier, an application identifier, a DNN, an S-NSSAI, or a QoS parameter.

In some embodiments, the AF session request may include an XRM service identifier for identifying the XRM SDF group, and SDFs belonging to the same SDF group in an XRM service/application have the same XRM service identifier.

In step S62, the AF session request is sent to a PCF entity, and the AF session request is configured for the PCF entity to perform a policy decision for the AF session request according to the common identifier and the time threshold.

In some embodiments, the time threshold included in the AF session request may be a time window or a time value.

In some embodiments, in addition to the time threshold included in the AF session request, the PCF may also determine the time threshold according to a timer or a time window set locally in the PCF entity, determine the time threshold according to a timer or a time window recorded in the operator policy, or determine the time threshold according to a default timer or time window in subscription information.

In an embodiment, when there is a timer or time window locally set in the PCF, there is a timer or a time window set in an operator policy, there is a default timer or time window recorded in subscription information, and there is also a time window or a time value included in the AF session request, the PCF may determine the time threshold according to a priority of these timers or time windows.

The priority of these timers or time windows may be determined according to a preset rule. For example, the priority of the default timer in the subscription information is lower than the priority of the timer in the operator policy, the priority of the timer in the operator policy is lower than the priority of the timer locally set in the PCF, and the priority of the timer locally set in the PCF is lower than the priority of the time window carried in the AF session request. The PCF may select the timer or time window with the highest priority as the time threshold.

In embodiments of the present invention, the core network function network element receives an AF session request including a common identifier and a time threshold and sends the AF session request to the PCF, so that the PCF can perform a policy decision for the AF session request based on the time threshold and the common identifier, thereby making a more reasonable policy decision and resource authorization for the XRM service, and providing better QoS guarantee for SDF transmission, without need to repeatedly modify the policy decision for a plurality of SDFs in the same XRM SDF group, thereby improving authorization efficiency.

In a method for transmission of XRM service data according to embodiments of the present invention, the AF session request is configured for the PCF entity to perform the policy decision for the AF session request identified by the common identifier with the same value and received before the time threshold is reached, and the common identifier with the same value is configured to identify that a plurality of XRM service data flows (SDFs) belong to the same group.

In a method for transmission of XRM service data according to embodiments of the present invention, the policy decision includes:
authorizing the same QoS to the SDFs in the SDF group;
generating the same QoS for each SDF according to subscription information and/or an operator policy corresponding to each SDF in the SDF group; or
generating for each SDF a respective PCC rule, and generating for each SDF a respective QoS, according to subscription information and/or an operator policy corresponding to each SDF in the SDF group.

The PCC rule represents the requirement of a service for QoS and charging requirement for the service. The network will provide services of different QoS to users according to the service types and user's subscription level, detect different service data flows and report charging information such as statistic traffic and duration to the charging center for charging.

In embodiments of the present invention, after determining an XRM SDF group to which the SDF belongs, the PCF may perform a policy decision for the SDFs in the same group, such as authorizing the same QoS or authorizing for each SDF a respective QoS, etc., so that the PCF can make a more reasonable policy decision and resource authorization for the XRM service, thereby providing better QoS guarantee for the SDF transmission.

In a method for transmission of XRM service data according to embodiments of the present invention, a policy decision for an AF session request with the common identifier sent after the time threshold is determined according to a policy decision for an AF session request sent before the time threshold.

In an embodiment, if the value of the common identifier of the AF session request sent after the time threshold is the same as the value of the common identifier of the AF session request sent before the time threshold, the policy decision for the AF session request sent after the time threshold may be the same as the policy decision for the AF session request sent before the time threshold.

For example, if the policy decision for the AF session request sent by the AF before the time threshold is that a respective PCC rule is generated for each SDF, and a respective QoS is generated for each SDF, based on subscription information and/or an operator policy corresponding to each SDF in the SDF group, the policy decision for the AF session sent by the AF after the time threshold may also be that a respective PCC rule is generated for each SDF, and a respective QoS is generated for each SDF, based on the subscription information and/or operator policy corresponding to each SDF in the SDF group.

In embodiments of the present invention, the policy decision for the AF session request sent by the AF after the time threshold may be determined based on the AF session request before the time threshold, without the PCF to re-determine the policy decision for the AF session request received after the time threshold, thus improving efficiency.

In a method for transmission of XRM service data according to embodiments of the present invention, the core network function network element includes an NEF entity and/or a TSCTSF entity.

In an embodiment, when the AF is an untrusted AF, the AF sends the AF session request to the PCF via the NEF and/or the TSCTSF.

In a method for transmission of XRM service data according to embodiments of the present invention, the core network function network element may receive and send the AF session request in the following procedure:
(a) Setting up an AF session with required QoS procedure;
(b) AF session with required QoS update procedure;
(c) Service specific parameter provisioning;
(d) Setting a policy for a future AF session.

The following describes a method for transmission of XRM service data according to embodiments of the present invention with reference to the interaction process between various entities in a core network device.

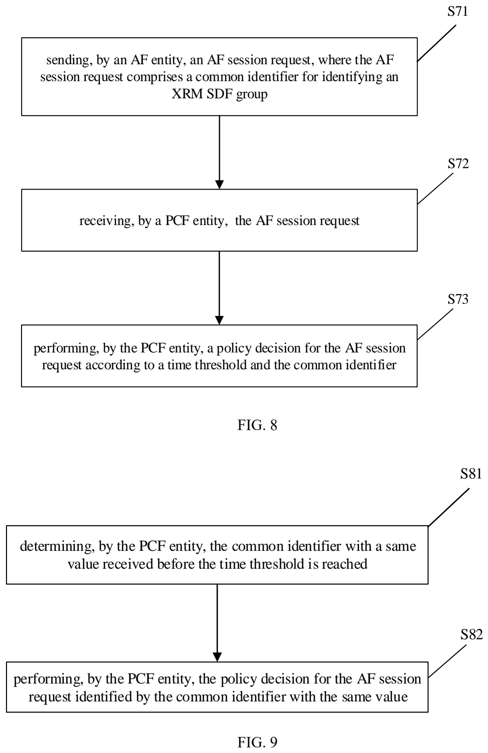

FIG. 8 is a flow chart showing a method for transmission of XRM service data according to an example embodiment. As shown in FIG. 8, the method includes the following steps.

In step S71, an AF entity sends an AF session request, and the AF session request includes a common identifier for identifying an XRM SDF group

A plurality of SDFs of an XRM service/application belong to the same SDF group, and the common identifiers of the SDFs within an SDF group are the same.

In an embodiment, the SDFs corresponding to the common identifier correspond to the same terminal or correspond to a plurality of terminals (a terminal group).

In an embodiment, the AF session request may also include information such as a UE address or a UE identifier, an AF identifier, an application identifier, a DNN, an S-NSSAI, or a QoS parameter.

In some embodiments, the AF session request may include an XRM service identifier for identifying the XRM SDF group, and the SDFs belonging to the same SDF group in an XRM service/application have the same XRM service identifier.

In step S72, a PCF entity receives the AF session request.

In step S73, the PCF entity performs a policy decision for the AF session request according to a time threshold and the common identifier.

In embodiments of the present invention, an AF entity sends an AF session request, and since the AF session request includes a common identifier for identifying an XRM SDF group, after receiving the AF session request, the PCF may determine the XRM group to which the SDF belongs according to the common identifier. Furthermore, the PCF may consider a time threshold, and perform a policy decision for an AF session request within the time threshold, so that the PCF may make a more reasonable policy decision and resource authorization for the XRM service according to the time threshold and the common identifier, and provide better QoS guarantee for SDF transmission, without need to repeatedly modify the policy decision for a plurality of SDFs in the same XRM SDF group, thereby improving authorization efficiency.

In a method for transmission of XRM service data according to embodiments of the present invention, the time threshold includes:
a time threshold determined according to a timer locally set in the core network device;
a time threshold determined according to a time value or a time window included in the AF session request;
a time threshold determined according to a timer or a time window in an operator policy;
a time threshold determined according to a default timer or time window in subscription information; or
a time threshold determined according to a timer locally set in the core network device, a time value or a time window included in the AF session request, a default timer or time window in an operator policy or subscription information, and a priority of these types of values.

In a method for transmission of XRM service data according to embodiments of the present invention, the above step S73 where the PCF entity performs a policy decision for the AF session request according to a time threshold and the common identifier may be implemented as steps S81-S82, as shown in FIG. 9.

In step S81, the PCF entity determines the common identifier with the same value received before the time threshold is reached.

The common identifier with the same value is configured to identify that a plurality of XRM SDFs belong to the same group.

In step S82, the PCF entity performs the policy decision for the AF session request identified by the common identifier with the same value.

In embodiments of the present invention, the PCF entity determines a time threshold and performs a policy decision for an AF session request identified by a common identifier with the same value before the time threshold is reached, so that the PCF entity may determine SDFs belonging to the same group and make the policy decision for the same group of SDFs, so that the PCF entity can make a more reasonable policy decision and resource authorization for the XRM service, and provide more optimized QoS guarantees for the SDF transmission.

In a method for transmission of XRM service data according to embodiments of the present invention, the policy decision includes:
authorizing, by the PCF entity, the same QoS to the SDFs in the SDF group;
generating, by the PCF entity, the same QoS for each SDF according to subscription information and/or an operator policy corresponding to each SDF in the SDF group; or
generating, by the PCF entity, for each SDF a respective policy control and charging (PCC) rule, and generating for each SDF a respective QoS, according to subscription information and/or an operator policy corresponding to each SDF in the SDF group.

The PCC rule represents the requirement of a service for QoS and charging requirement for the service. The network will provide services of different QoS to users according to the service types and the user's subscription level, detect different service data flows and report the charging information such as statistic traffic and duration to the charging center for charging.

In embodiments of the present invention, after determining the XRM SDF group to which the SDF belongs, the policy decision may be made for the SDFs in the same group, such as authorizing the same QoS or authorizing for each SDF a respective QoS, etc., so that the core network device can make a more reasonable policy decision and resource authorization for the XRM service, and provide better QoS guarantees for the SDF transmission.

In a method for transmission of XRM service data according to embodiments of the present invention, in response to receiving an AF session request including the common identifier after the time threshold, the PCF performs a policy decision for the AF session request received after the time threshold according to the policy decision performed for the AF session request received before the time threshold.

In an embodiment, if the value of the common identifier of the AF session request received by the PCF entity after the time threshold is the same as the value of the common identifier of the AF session request received before the time threshold, PCF entity may perform the same policy decision for the AF session request received after the time threshold as that performed for the AF session request received before the time threshold.

For example, if the policy decision performed by the PCF entity for the AF session request received before the time threshold is that a respective PCC rule is generated for each SDF, and a respective QoS is generated for each SDF, based on the subscription information and/or operator policy corresponding to each SDF in the SDF group, the policy decision performed by the PCF entity for the AF session request received after the time threshold may also be that a respective PCC rule is generated for each SDF, and a respective QoS is generated for each SDF, based on the subscription information and/or operator policy corresponding to each SDF in the SDF group.

In embodiments of the present invention, the policy decision for the AF session request received by the PCF entity after the time threshold may be determined based on the AF session request before the time threshold, without the need to re-determine the policy decision for the AF session request received after the time threshold, thus improving efficiency.

In a method for transmission of XRM service data according to embodiments of the present invention, the AF session request may be transmitted in the following procedure:
(a) Setting up an AF session with required QoS procedure;
(b) AF session with required QoS update procedure;
(c) Service specific parameter provisioning;
(d) Setting a policy for a future AF session.

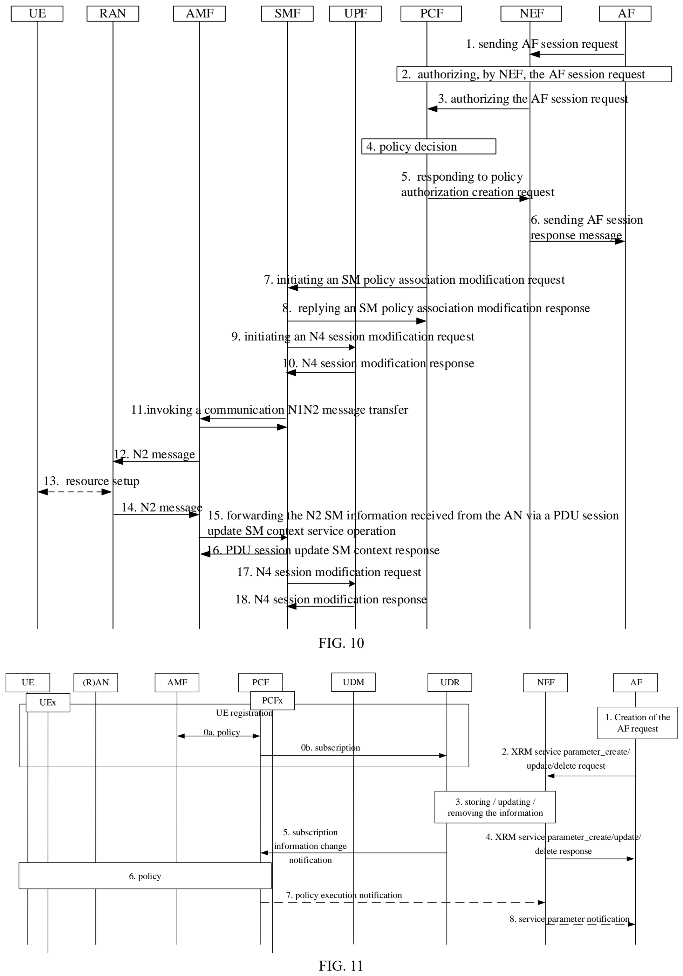

The method for transmission of XRM service data according to embodiments of the present invention will be described in detail and thoroughly below, taking procedure (a): setting up an AF session with required QoS procedure as an example, as shown in FIG. 10.
1. An AF sends an AF session request. For example, the AF creates the AF session request through an AF session with a QoS creation request. The AF session request includes a common identifier for identifying an SDF group of an XRM service, and SDFs having the common identifier with the same value belong to the same XRM service. In an embodiment, the AF session request also includes a time window. In an embodiment, the AF session request also includes information such as a UE address or UE identifier, an AF identifier, an application identifier, a DNN, an S-NSSAI, or a QoS parameter.
2. An NEF authorizes the AF session request. If the AF is an untrusted AF, the AF sends the AF session request to a PCF through the NEF. In an embodiment, the NEF performs relevant mappings, including a mapping of an identifier for identifying the XRM service (AF service identifier) to the DNN and S-NSSAI, a mapping of an external application to a core network (CN) application identifier; and a mapping of an external UE identifier to a UE identifier within the CN (such as subscriber permanent identifier (SUPI)) according to UDM subscription information, as well as a mapping of an external XRM service group identifier to an internal XRM service group identifier according to UDM subscription information.
3. The NEF authorizes the AF session request and determines whether to call TSCTSF or contact the PCF directly according to the parameter provided by the AF. These signaling steps are the same as the steps in TS 23.502 clause 4.15.6.6 for setting up an AF session with required QoS procedure. The PCF receives the AF session request sent by the AF from the NEF or the TSCTSF. The NEF triggers a policy authorization creation request (Npcf_PolicyAuthorization_Create request) and sends the AF session request to the PCF for the PCF to perform a policy decision for the AF session.
4. The PCF makes a policy decision. The PCF may determine updated or new policy decision information that needs to be sent to an SMF.

In an embodiment, the PCF determines the common identifier with the same value received before the time threshold is reached, and performs a policy decision for the AF session request identified by the common identifier with the same value.

The time threshold may be determined according to a timer locally set in the PCF entity; or according to a time window included in the AF session request; or according to a timer in an operator policy; or according to a default timer in subscription information; or according to a priority of a timer locally set in the PCF entity, a time window, a timer in an operator policy, and a default timer.

The policy decision performed by the PCF for the AF session request identified by the common identifier with the same value may be authorizing the same QoS for the SDFs in the SDF group; or generating the same PCC rule for each SDF and generating the same QoS for each SDF according to subscription information and/or an operator policy corresponding to each SDF in the SDF group; or generating for each SDF a respective PCC rule and generating for each SDF a respective QoS according to subscription information and/or an operator policy corresponding to each SDF in the SDF group.

Further, the PCF receives an AF session request including the common identifier after the time threshold, and performs a policy decision for the AF session request received after the time threshold according to the policy decision performed for the AF session request received before the time threshold.

5. The PCF responds to the policy authorization creation request of the NEF.

6. The NEF sends an AF session response message with QoS creation to the AF. The AF session response message carries an authorization result, which is configured to inform the AF whether the AF session request is authorized.

7. The PCF initiates an SM policy association modification request (PCC rule (QoS monitoring policy)) to the SMF.

According to a QoS policy decision from the PCF, the SMF generates a QoS monitoring configuration for a UPF (and for an RAN) as described in step 4.

8. The SMF replies to the PCF with an SM policy association modification response.

9. The SMF initiates an N4 session modification request (a QoS monitoring configuration) to UPF.

10. After receiving the QoS monitoring configuration, the UPF enables measurement and reporting. The UPF responds to the SMF.

11. For the SMF requested modification, the SMF invokes a communication N1N2 message transfer ([N2 SM information] (PDU session ID, QFI, QoS profile, QoS monitoring configuration), N1 SM container).

12. An AMF may send a N2 ((N2 SM information received from the SMF), NAS message (PDU Session ID, N1 SM container (PDU Session Modification Command)) message to the (R)AN. After receiving the QoS monitoring configuration, the RAN enables event measurement and reporting.

13. The UE and the RAN perform resource setting.

14. The (R)AN may acknowledge the N2 PDU session request by sending an N2 PDU session Ack message to the AMF.

15. The AMF forwards the N2 SM information received from the AN to the SMF via a PDU session update SM context service operation.

16. The SMF replies with a PDU session update SM context response.

17-18. The SMF may update an N4 session of the UPF that is involved in a PDU session modification by sending an N4 session modification request message to the UPF. When receiving a QoS monitoring report, the PCF sends a notification to the AF.

The method for transmission of XRM service data according to embodiments of the present invention will be described in detail and thoroughly below, taking procedure (b): service specific parameter provisioning as an example, as shown in FIG. 11.

0. Some or all UEs related to an XRM service or a multimodal data service have registered with the network and selected a PCF to complete AM session association. The PCF subscribes to a UDM for change notification of subscription information related to the XRM service or the multimodal data service according to a policy and a QoS requirement of the XRM service.

1. An AF triggers an XRM service parameter service and creates an AF session request, and the AF session request includes information such as a common identifier, a UE address or identifier, an XRM service identifier, etc. In an embodiment, the AF session request carries time window information.

The AF provides XRM service or a plurality of data service specific parameters to one or more UEs related to the service through the XRM service parameter service. The AF session request includes: the common identifier, service parameters, UE or UE group, subscription to events, etc.

The service description identifies the XRM service or the XRM data service, which may be identified by a combination of DNN and combined S-NSSAI, or XRM ID, or may be represented by an AF service identifier or an external application identifier.

Service Parameters: relate to information on the AF guideline for policy and QoS determination related to the XRM service or the multimodal data service, and a list of rules that associate the XRM service or a plurality of data service application traffic, parameters such as UE policy, common identifier or group identifier, combination of DNN and S-NSSAI, SSC mode, and selection priority of corresponding rules (e.g., priority of alternative QoS parameters, priority of time threshold, priority of access type or route selection, etc.)

UE or UE group: single UE or a plurality of UEs (Group UE) related to the XRM service or the multimodal data service associated with an AF request.

Subscription to events: the AF may subscribe to notifications about a result of an SM policy, or execution and change of an AM policy or UE policy, or subscribe to XRM service data flow events.

When the AF needs to update or delete the corresponding request or subscription, the update or deletion process of the AF session request may also be initiated through the service.

2. The AF sends the request to an NEF. The NEF authorizes the AF request. The NEF performs relevant mappings, including a mapping of an identifier for identifying the XRM service or the XRM data service (AF service identifier) to the DNN and S-NSSAI, a mapping of an external application to a CN application identifier, and a mapping of an external UE identifier to a UE identifier within the CN (such as SUPI) according to UDM subscription information, as well as a mapping of an external XRM service group identifier to an internal XRM service group identifier according to UDM subscription information.

3. The NEF stores request information in a UDR (e.g., stored as service characteristic parameter information of application data). In an embodiment, the NEF may improve the corresponding service parameter according to the local configuration.

In an embodiment, the NEF may confirm, for the XRM service or the multimodal data service of a single UE or a UE group, whether the requested service characteristic is authorizable, according to an operator policy and subscription information, and store the corresponding parameter in the UDR.

If a plurality of UEs are involved, the NEF transmits the relevant service parameter to the PCF, and corresponding authorization as well as decision or update of a policy and rule are performed in each PCF. The PCF stores corresponding information in the UDR according to an authorization result of the request. (This supports single PCF and multi-PCF scenarios)

In a multi-UE scenario, subscription data of UE group members may be associated through an XRM service indication or a group ID/common ID.

The AF or the PCF may subscribe, through the NEF, to an event trigger related to the XRM service or the multimodal data, such as a QoS monitoring report, service QoS update, UE relocation, PCF change, etc. The AF or the PCF receives an NEF report, obtains a corresponding notification, and performs a subsequent application requirement or a QoS rule update.

4. The NEF returns a creation request response message to the AF.

If in step 0, the PCF performs a subscription information update notification after the UE registration, a subsequent process is performed because UDR subscription information is updated due to the AF request.

5. The PCF receives a subscription information change notification from the UDR.

6. The PCF transmits a UE policy to the UE.

7. If the AF subscribes to an execution notification for notifying the XRM service relevant policy, the PCF sends a relevant execution result to the AF through the NEF. At the same time, if there is a change in the relevant subscription parameter, the PCF updates the change to the UDR, triggering the serving PCF of other UEs related to the XRM service group to perform policy change and synchronization.

8. After receiving the notification, the NEF first performs the mapping of relevant internal and external parameters, and sends the relevant report to the AF.

In embodiments of the present invention, the PCF determines a time threshold and performs a policy decision for SDFs having a common identifier with the same value received within the time threshold, thereby providing better QoS guarantee for SDF transmission, without need to repeatedly modify the policy decision for a plurality of SDFs belonging to the same XRM SDF group, thereby improving authorization efficiency.

It should be noted that those skilled in the art will appreciate that the various implementations/embodiments involved in the above embodiments of the present invention may be used in conjunction with the aforementioned embodiments or may be used independently. The principles of implementation are similar whether used independently or in conjunction with the foregoing embodiments. In the present invention, some examples are described in the way of co-implementation. Those skilled in the art will appreciate that such examples are not limitative for the embodiments of the present invention.

Based on the same conception, embodiments of the present invention further provide a device for transmission of XRM service data.

It may be understood that, in order to implement the above-mentioned functions, the device for transmission of XRM service data provided by the embodiments of the present invention includes corresponding hardware structures and/or software modules for performing various functions. The embodiments of the present invention may be implemented in the form of hardware or a combination of hardware and computer software, in combination with units and algorithm steps of each example disclosed in the embodiments of the present invention. Whether a function is performed by hardware or by computer software to drive hardware depends on a specific application and design constraints of the technical solution. For each specific application, those skilled in the art may use different methods to implement the described function, but such an implementation should not be regarded as extending beyond the scope of the technical solutions of the embodiments of the present invention.

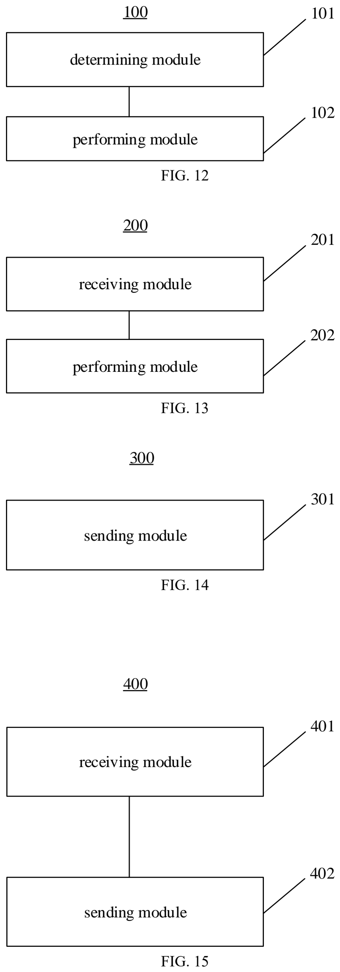

FIG. 12 is a block diagram showing a device for transmission of XRM service data according to an example embodiment. Referring to FIG. 12, the apparatus 100 includes a determining module 101 and a performing module 102.

The determining module 101 is configured to determine an application function (AF) session request, and the session request includes a common identifier for identifying an extended reality and multimedia (XRM) service data flow (SDF) group.

The performing module 102 is configured to perform a policy decision for the AF session request according to a time threshold and the common identifier.

In an embodiment, the time threshold includes:
a time threshold determined according to a timer locally set in the core network device;
a time threshold determined according to a time value or a time window included in the AF session request;
a time threshold determined according to a timer or a time window in an operator policy;
a time threshold determined according to a default timer or time window in subscription information; or
a time threshold determined according to a priority of a timer locally set in the core network device, a time value or a time window included in the AF session request, a timer or a time window in an operator policy, and a default timer or time window in subscription information.

In an embodiment, performing the policy decision for the AF session request according to the time threshold and the common identifier includes:
determining the common identifier with the same value received before the time threshold is reached, where the common identifier with the same value is configured to identify that a plurality of XRM service data flows (SDF) belong to the same group of service data flows; and
performing the policy decision for the AF session request identified by the common identifier with the same value.

In an embodiment, the policy decision includes:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

In an embodiment, the performing module 102 is configured to: in response to receiving an AF session request including the common identifier after the time threshold, performing a policy decision for the AF session request received after the time threshold according to a policy decision performed for an AF session request received before the time threshold.

FIG. 13 is a block diagram showing a device for transmission of XRM service data according to an example embodiment. Referring to FIG. 13, the device 200 includes a receiving module 201 and a performing module 202. The receiving module 201 is configured to receive an application function (AF) session request, and the AF session request includes a common identifier for identifying an extended reality and multimedia (XRM) service data flow (SDF) group.

The performing module 202 is configured to perform a policy decision for the AF session request according to a time threshold and the common identifier.

In an embodiment, the time threshold includes:
a time threshold determined according to a timer locally set in the PCF entity;
a time threshold determined according to a time value or a time window included in the AF session request;
a time threshold determined according to a timer or a time window in an operator policy;
a time threshold determined according to a default timer or time window in subscription information; or
a time threshold determined according to a priority of a timer or a time window locally set in the PCF entity, a time value or a time window included in the AF session request, a timer or a time window in an operator policy, and a default timer or time window in subscription information.

In an embodiment, the performing module 102 is configured to: determine the common identifier with the same value received before the time threshold is reached, where the common identifier with the same value is configured to identify that a plurality of XRM service data flows (SDF) belong to the same group; and perform the policy decision for the AF session request identified by the common identifier with the same value.

In an embodiment, the policy decision includes:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

In an embodiment, the performing module 102 is configured to: in response to receiving an AF session request including the common identifier after the time threshold, performing a policy decision for the AF session request received after the time threshold according to a policy decision performed for an AF session request received before the time threshold.

In an embodiment, the receiving module 101 is configured to receive the AF session request from at least one of: an AF entity, a network exposure function (NEF) entity, or a time sensitive communication and time synchronization function (TSCTSF) entity.

FIG. 14 is a block diagram showing a device for transmission of XRM service data according to an example embodiment. Referring to FIG. 14, the device 300 includes a sending module 301. The sending module 301 is configured to send an AF session request, which includes a time threshold and a common identifier for identifying an extended reality and multimedia (XRM) service data flow (SDF) group, and the AF session request is configured for a policy control function (PCF) entity to perform a policy decision for the AF session request according to the common identifier and the time threshold.

In an embodiment, the AF session request is configured for the PCF entity to perform the policy decision for the AF session request identified by the common identifier with the same value and received before the time threshold is reached, and the common identifier with the same value is configured to identify that a plurality of XRM service data flows (SDF) belong to the same group.

In an embodiment, the policy decision includes:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

In an embodiment, a policy decision of an AF session request with the common identifier sent after the time threshold is determined according to a policy decision of an AF session request sent before the time threshold.

In an embodiment, the sending module 301 is configured to send the AF session request to at least one of: the policy control function (PCF) entity, a network exposure function (NEF) entity, or a time sensitive communication and time synchronization function (TSCTSF) entity.

FIG. 15 is a block diagram showing a device for transmission of XRM service data according to an example embodiment. Referring to FIG. 15, the device 400 includes a receiving module 401 and a sending module 402. The receiving module 401 is configured to receive an application function (AF) session request, and the AF session request includes a time threshold and a common identifier for identifying an extended reality and multimedia (XRM) service data flow (SDF) group.

The sending module 402 is configured to send the AF session request to a policy control function (PCF) entity, and the AF session request is configured for the PCF entity to perform a policy decision for the AF session request according to the common identifier and the time threshold.

In an embodiment, the AF session request is configured for the PCF entity to perform the policy decision for the AF session request identified by the common identifier with the same value and received before the time threshold is reached, and the common identifier with the same value is configured to identify that a plurality of XRM service data flows (SDF) belong to the same group.

In an embodiment, the policy decision includes:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

In an embodiment, a policy decision of an AF session request with the common identifier sent after the time threshold is determined according to a policy decision of an AF session request sent before the time threshold.

In an embodiment, the core network device includes a network exposure function (NEF) entity and/or a time sensitive communication and time synchronization function (TSCTSF) entity.

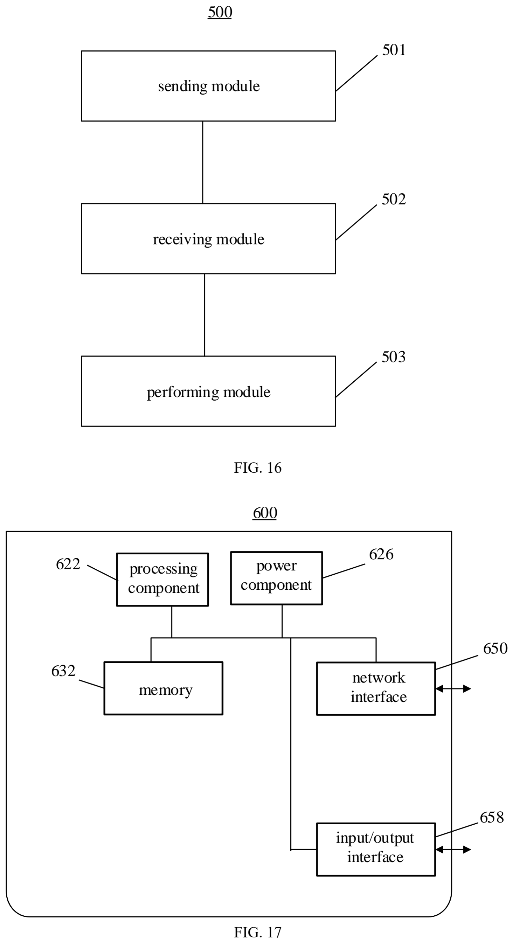

FIG. 16 is a block diagram showing a device for transmission of XRM service data according to an example embodiment. Referring to FIG. 16, the device 500 includes a sending module 501, a receiving module 502 and a performing module 503.

The sending module 501 is configured for an application function (AF) entity to send an AF session request, and the AF session request includes a common identifier for identifying an extended reality and multimedia (XRM) service data flow (SDF) group.

The receiving module 502 is configured for a policy control function (PCF) entity to receive the AF session request.

The performing module 503 is configured for the PCF entity to perform a policy decision for the AF session request according to a time threshold and the common identifier.

In an embodiment, the time threshold includes:
a time threshold determined according to a timer locally set in the PCF entity;
a time threshold determined according to a time value or a time window included in the AF session request;
a time threshold determined according to a timer or a time window in an operator policy;
a time threshold determined according to a default timer or time window in subscription information; or
a time threshold determined according to a priority of a timer locally set in the PCF entity, a time value or a time window included in the AF session request, a timer or a time window in an operator policy, and a default timer or time window in subscription information.

In an embodiment, the performing module 503 is configured for the PCF entity to: determine the common identifier with the same value received before the time threshold is reached, where the common identifier with the same value is configured to identify that a plurality of XRM service data flows (SDF) belong to the same group of service data flows; and perform the policy decision for the AF session request identified by the common identifier with the same value.

In an embodiment, the policy decision includes:
authorizing, by the PCF entity, the same quality of service (QoS) to the SDFs in the SDF group;
generating, by the PCF entity, the same QoS for each SDF according to subscription information and/or an operator policy corresponding to each SDF in the SDF group; or
generating, by the PCF entity, for each SDF a respective policy control and charging (PCC) rule, and generating for each SDF a respective QoS, according to subscription information and/or an operator policy corresponding to each SDF in the SDF group.

In an embodiment, the performing module 503 is configured for the PCF entity to perform a policy decision for the AF session request received after the time threshold according to a policy decision performed for an AF session request received before the time threshold, in response to receiving an AF session request including the common identifier after the time threshold.

In an embodiment, the sending module 501 is configured for the AF entity to send the AF session request to at least one of: a network exposure function (NEF) entity, a time sensitive communication and time synchronization function (TSCTSF) entity, or the PCF entity.

In an embodiment, the receiving module 502 is configured for the PCF entity to receive the AF session request sent by at least one of: the AF entity, a network exposure function (NEF) entity, or a time sensitive communication and time synchronization function (TSCTSF) entity.

With respect to the devices in the above embodiments, the specific manners of individual modules therein for performing operations have been described in detail in the embodiments regarding the method, which will not be elaborated herein.

FIG. 17 is a block diagram illustrating a device 600 for transmission of extended reality and multimedia service data according to an example embodiment. For example, the device 600 may be provided as a server. Referring to FIG. 17, the device 600 includes a processing component 622 and a memory resource represented by a memory 632. The processing component 622 may further include one or more processors. The memory resource is configured to store instructions executable by the processing component 622, such as an application program. The application program stored in the memory 632 may include one or more modules each corresponding to a set of instructions. In addition, the processing component 622 is configured to execute the instructions to perform the above method.

The device 600 further includes a power component 626 configured to operate a power management of the device 600, a wired or wireless network interface 650 configured to connect the device 600 to the network, and an input/output (I/O) interface 658. The device 600 may operate an operating system stored in the memory 632, such as Windows Server TM, Mac OS XTM, Unix TM, Linux TM, Free BSDTM, or the like.

In embodiments, there is further provided a non-transitory computer-readable storage medium (such as the memory 632) including instructions that, when executed by the processor 622 of the device 600, cause the above-described method to be implemented. For example, the non-transitory computer-readable storage medium may be a ROM, a RAM, a CD-ROM, a magnetic tape, a floppy disc, an optical data storage device, and the like.

It is further understood that "a plurality of" in the present disclosure refers to two or more, and other quantifiers are similar thereto. Term "and/or" describes an association relationship of associated objects, and means that there may exist three relationships. For example, "A and/or B" may represent that A exists alone, A and B exist at the same time, and B exists alone. A character "/" generally indicates that contextual objects are in an "or" relationship. Terms "a/an" and "the" in the singular form are intended to include plural forms, unless clearly indicated in the context otherwise.

It is further understood that the meanings of the words "in response to" and "if" involved in the present invention depend on the context and the actual usage scenario. For example, the word "in response to" used herein may be interpreted as "upon...", "when...", or "if".

It is further understood that terms such as "first", and "second" are used to describe various information, these information should not be limited by these terms. These terms are used for distinguishing information of the same type from each other and do not denote a particular order or degree of importance. As a matter of fact, the terms such as "first", and "second" may be used interchangeably. For example, without departing from the scope of embodiments of the present invention, first information may also be referred to as second information, and similarly, the second information may also be referred to as the first information.

It is further understood that although operations are described in a specific order in the accompanying drawings in the embodiments of the present invention, it should not be understood that these operations are required to be performed in the specific order shown or in a serial order, or that all of the operations shown are required to be performed to obtain desired results. In some circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including common knowledge or conventional technical means known in the art but not disclosed in the present invention. The specification and examples should be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

## Claims

1. A method for transmission of extended reality and multimedia service data, performed by a core network device, comprising:
determining an application function (AF) session request, wherein the session request comprises a common identifier for identifying an extended reality and multimedia (XRM) service data flow (SDF) group; and
performing a policy decision for the AF session request according to a time threshold and the common identifier.

2. The method according to claim 1, wherein the time threshold comprises:
a time threshold determined according to a timer locally set in the core network device;
a time threshold determined according to a time value or a time window comprised in the AF session request;
a time threshold determined according to a timer or a time window in an operator policy;
a time threshold determined according to a default timer or time window in subscription information; or
a time threshold determined according to a priority of a timer locally set in the core network device, a time value or a time window comprised in the AF session request, a timer or a time window in an operator policy, and a default timer or time window in subscription information.

3. The method according to claim 1 or 2, wherein performing the policy decision for the AF session request according to the time threshold and the common identifier comprises:
determining the common identifier with the same value received before the time threshold is reached, wherein the common identifier with the same value is configured to identify that a plurality of XRM service data flows (SDFs) belong to the same group of service data flows; and
performing the policy decision for the AF session request identified by the common identifier with the same value.

4. The method according to claim 3, wherein the policy decision comprises:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

5. The method according to claim 3 or 4, further comprising:
in response to receiving an AF session request comprising the common identifier after the time threshold, performing a policy decision for the AF session request received after the time threshold according to a policy decision performed for an AF session request received before the time threshold.

6. A method for transmission of extended reality and multimedia service data, performed by a policy control function (PCF) entity in a core network device, comprising:
receiving an application function (AF) session request, wherein the AF session request comprises a common identifier for identifying an extended reality and multimedia (XRM) service data flow (SDF) group; and
performing a policy decision for the AF session request according to a time threshold and the common identifier.

7. The method according to claim 6, wherein the time threshold comprises:
a time threshold determined according to a timer locally set in the PCF entity;
a time threshold determined according to a time value or a time window comprised in the AF session request;
a time threshold determined according to a timer or a time window in an operator policy;
a time threshold determined according to a default timer or time window in subscription information; or
a time threshold determined according to a priority of a timer locally set in the PCF, a time value or a time window comprised in the AF session request, a timer or a time window in an operator policy, and a default timer or time window in subscription information.

8. The method according to claim 6 or 7, wherein performing the policy decision for the AF session request according to the time threshold and the common identifier comprises:
determining the common identifier with the same value received before the time threshold is reached, wherein the common identifier with the same value is configured to identify that a plurality of XRM service data flows (SDFs) belong to the same group of service data flows; and
performing the policy decision for the AF session request identified by the common identifier with the same value.

9. The method according to claim 8, wherein the policy decision comprises:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

10. The method according to claim 8 or 9, further comprising:
in response to receiving an AF session request comprising the common identifier after the time threshold, performing a policy decision for the AF session request received after the time threshold according to a policy decision performed for an AF session request received before the time threshold.

11. The method according to claim 6, wherein receiving the AF session request comprises:
receiving the AF session request from at least one of: an AF entity, a network exposure function (NEF) entity, or a time sensitive communication and time synchronization function (TSCTSF) entity.

12. A method for transmission of extended reality and multimedia service data, performed by an application function (AF) entity in a core network device, comprising:
sending an AF session request, wherein the AF session request comprises a time threshold and a common identifier for identifying an extended reality and multimedia (XRM) service data flow (SDF) group, and the AF session request is configured for a policy control function (PCF) entity to perform a policy decision for the AF session request according to the common identifier and the time threshold.

13. The method according to claim 12, wherein the AF session request is configured for the PCF entity to perform the policy decision for the AF session request identified by the common identifier with the same value and received before the time threshold is reached, wherein the common identifier with the same value is configured to identify that a plurality of XRM service data flows (SDF) belong to the same group.

14. The method according to claim 12 or 13, wherein the policy decision comprises:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

15. The method according to claim 12, wherein a policy decision of an AF session request with the common identifier sent after the time threshold is determined according to a policy decision of an AF session request sent before the time threshold.

16. The method according to claim 15, wherein sending the AF session request comprises:
sending the AF session request to at least one of: the policy control function (PCF) entity, a network exposure function (NEF) entity, or a time sensitive communication and time synchronization function (TSCTSF) entity.

17. A method for transmission of extended reality and multimedia service data, performed by a core network function network element in a core network device, comprising:
receiving an application function (AF) session request, wherein the AF session request comprises a time threshold and a common identifier for identifying an extended reality and multimedia (XRM) service data flow (SDF) group; and
sending the AF session request to a policy control function (PCF) entity, wherein the AF session request is configured for the PCF entity to perform a policy decision for the AF session request according to the common identifier and the time threshold.

18. The method according to claim 17, wherein the AF session request is configured for the PCF entity to perform the policy decision for the AF session request identified by the common identifier with the same value and received before the time threshold is reached, wherein the common identifier with the same value is configured to identify that a plurality of XRM service data flows (SDF) belong to the same group.

19. The method according to claim 17 or 18, wherein the policy decision comprises:
authorizing the same quality of service (QoS) to the SDFs in the SDF group;
generating the same QoS for each SDF according to subscription information and/or an operator policy corresponding to each SDF in the SDF group; or
generating for each SDF a respective policy control and charging (PCC) rule, and generating for each SDF a respective QoS, according to subscription information and/or an operator policy corresponding to each SDF in the SDF group.

20. The method according to claim 19, wherein a policy decision of an AF session request with the common identifier sent after the time threshold is determined according to a policy decision of an AF session request sent before the time threshold.

21. The method according to claim 17, wherein the core network function network element comprises a network exposure function (NEF) entity and/or a time sensitive communication and time synchronization function (TSCTSF) entity.

22. A method for transmission of extended reality and multimedia service data, comprising:
sending, by an application function (AF) entity, an AF session request, wherein the AF session request comprises a common identifier for identifying an extended reality and multimedia (XRM) service data flow (SDF) group;
receiving, by a policy control function (PCF) entity, the AF session request; and
performing, by the PCF entity, a policy decision for the AF session request according to a time threshold and the common identifier.

23. The method according to claim 22, wherein the time threshold comprises:
a time threshold determined according to a timer locally set in the PCF entity;
a time threshold determined according to a time value or a time window comprised in the AF session request;
a time threshold determined according to a timer or a time window in an operator policy;
a time threshold determined according to a default timer or time window in subscription information; or
a time threshold determined according to a priority of a timer locally set in the PCF, a time value or a time window comprised in the AF session request, a timer or a time window in an operator policy, and a default timer or time window in subscription information.

24. The method according to claim 22 or 23, wherein performing, by the PCF entity, the policy decision for the AF session request according to the time threshold and the common identifier comprises:
determining, by the PCF entity, the common identifier with the same value received before the time threshold is reached, wherein the common identifier with the same value is configured to identify that a plurality of XRM service data flows (SDF) belong to the same group of service data flows; and
performing, by the PCF entity, the policy decision for the AF session request identified by the common identifier with the same value.

25. The method according to claim 24, wherein the policy decision comprises:
authorizing, by the PCF entity, the same quality of service (QoS) to the SDFs in the SDF group;
generating, by the PCF entity, the same QoS for each SDF according to subscription information and/or an operator policy corresponding to each SDF in the SDF group; or
generating, by the PCF entity, for each SDF a respective policy control and charging (PCC) rule, and generating for each SDF a respective QoS, according to subscription information and/or an operator policy corresponding to each SDF in the SDF group.

26. The method according to claim 24 or 25, further comprising:
in response to receiving an AF session request comprising the common identifier after the time threshold, performing, by the PCF entity, a policy decision for the AF session request received after the time threshold according to a policy decision performed for an AF session request received before the time threshold.

27. The method according to claim 22, wherein sending, by the AF entity, the AF session request comprises:
sending, by the AF entity, the AF session request to at least one of: a network exposure function (NEF) entity, a time sensitive communication and time synchronization function (TSCTSF) entity, or the PCF entity.

28. The method according to claim 22, wherein receiving, by the PCF entity, the AF session request comprises:
receiving, by the PCF entity, the AF session request sent by at least one of: the AF entity, a network exposure function (NEF) entity, or a time sensitive communication and time synchronization function (TSCTSF) entity.

29. A device for transmission of extended reality and multimedia service data, comprising:
a determining module, configured to determine an application function (AF) session request, wherein the session request comprises a common identifier for identifying an extended reality and multimedia (XRM) service data flow (SDF) group; and
a performing module, configured to perform a policy decision for the AF session request according to a time threshold and the common identifier.

30. A device for transmission of extended reality and multimedia service data, comprising:
a receiving module, configured to receive an application function (AF) session request, wherein the AF session request comprises a common identifier for identifying an extended reality and multimedia (XRM) service data flow (SDF) group; and
a performing module, configured to perform a policy decision for the AF session request according to a time threshold and the common identifier.

31. A device for transmission of extended reality and multimedia service data, comprising:
a sending module, configured to send an AF session request, wherein the AF session request comprises a time threshold and a common identifier for identifying an extended reality and multimedia (XRM) service data flow (SDF) group, and the AF session request is configured for a policy control function (PCF) entity to perform a policy decision for the AF session request according to the common identifier and the time threshold.

32. A device for transmission of extended reality and multimedia service data, comprising:
a receiving module, configured to receive an application function (AF) session request, wherein the AF session request comprises a time threshold and a common identifier for identifying an extended reality and multimedia (XRM) service data flow (SDF) group; and
a sending module, configured to send the AF session request to a policy control function (PCF) entity, wherein the AF session request is configured for the PCF entity to perform a policy decision for the AF session request according to the common identifier and the time threshold.

33. A device for transmission of extended reality and multimedia service data, comprising:
a sending module, configured for an application function entity (AF) to send an AF session request, wherein the AF session request comprises a common identifier for identifying an extended reality and multimedia (XRM) service data flow (SDF) group;
a receiving module, configured for a policy control function (PCF) entity to receive the AF session request; and
a performing module, configured for the PCF entity to perform a policy decision for the AF session request according to a time threshold and the common identifier.

34. A device for transmission of extended reality and multimedia service data, comprising:
a processor; and
a memory for storing instructions executable by the processor;
wherein the processor is configured to perform: the method according to any one of claims 1 to 5, the method according to any one of claims 6 to 11, the method according to any one of claims 12 to 16, the method according to any one of claims 17 to 21, or the method according to any one of claims 22 to 28.

35. A storage medium, having stored therein instructions, wherein the instructions, when executed by a processor of a core network device, cause the core network device to perform the method according to any one of claims 1 to 5,
the instructions, when executed by a processor of a policy control function (PCF) entity, cause the PCF entity to perform the method according to any one of claims 6 to 11,
the instructions, when executed by a processor of an application function (AF) entity, cause the AF entity to perform the method according to any one of claims 12 to 16,
the instructions, when executed by a processor of a core network function network element, cause the core network function network element to perform the method according to any one of claims 17 to 21, or
the instructions, when executed by processors of a PCF entity and an AF entity in the core network device, cause the PCF entity and the AF entity to perform the method according to any one of claims 22 to 28.

36. A communication system, configured to perform the method according to any one of claims 1 to 5.

37. A communication system, comprising:
a policy control function (PCF) entity for performing the method according to any one of claims 6 to 11;
an application function (AF) entity for performing the method according to any one of claims 12 to 16; and
a core network function network element, configured to perform the method according to any one of claims 17-21.
